# EUROPÄISCHE PATENTSCHRIFT

(11) **EP 4 419 602 B1**
(45) Veröffentlichungstag und Bekanntmachung des Hinweises auf die Patenterteilung: **08.04.2026**
(21) Anmeldenummer: 22808638.5
(22) Anmeldetag: 18.10.2022
(51) Int. Cl.: C08L 101/10, C09J 171/02, C09J 201/10

(54) **REAKTIVE HEISSSCHMELZKLEBSTOFFZUSAMMENSETZUNGEN BASIEREND AUF ALPHA-SILAN-TERMINIERTEN ORGANISCHEN POLYMEREN**
REACTIVE HOT-MELT ADHESIVE COMPOSITIONS BASED ON ALPHA-SILANE-TERMINATED ORGANIC POLYMERS
COMPOSITIONS D'ADHÉSIFS THERMOFUSIBLES RÉACTIFS À BASE DE POLYMÈRES ORGANIQUES À TERMINAISON ALPHA-SILANE

(30) Priorität: 22.10.2021 DE 102021127517
(43) Veröffentlichungstag der Anmeldung: 28.08.2024
(73) Patentinhaber: Kleiberit SE & Co. KG, 76356 Weingarten (DE)
(72) Erfinder: BECKER-WEIMANN, Klaus, 76530 Baden-Baden (DE); FRANK, Patrick, 76149 Karlsruhe (DE); WUNDERLICH, Steffen, 69126 Heidelberg (DE)
(74) Vertreter: Büchel, Edwin
(86) Internationale Anmeldenummer: PCT/EP2022/078919
(87) Internationale Veröffentlichungsnummer: WO 2023/066902

(56) Entgegenhaltungen:
- WO-A1-2014/018349

## Beschreibung

Die vorliegende Erfindung betrifft reaktive Heißschmelzklebstoffzusammensetzungen. Die Erfindung betrifft weiterhin Verfahren zu deren Herstellung sowie ein Verfahren zur Flächenkaschierung unter Verwendung der Zusammensetzung.

Reaktive Schmelzklebstoffe nehmen aufgrund ihrer Vorteile, wie zum Beispiel einer kurzen Abbindezeit, hohen Anfangsfestigkeit und Beständigkeit, einen großen Marktanteil ein, werden vielseitig eingesetzt und haben in vielen Anwendungen lösungsmittelhaltige Klebstoffe ersetzt (siehe z.B. Bodo Müller, Walter Rath, Formulierung von Kleb- und Dichtstoffen, Vincentz Network; 1. Auflage, Dezember 2004).

Wichtigster Vertreter unter den reaktiven Schmelzklebstoffen stellen feuchtigkeitsvernetzende Polyurethane auf Basis von Methylendiphenyldiisocyanat (MDI) dar. Der Umgang mit monomerem MDI wurde aufgrund seiner sensibilisierenden Wirkung in der jüngsten Vergangenheit unter REACH beschränkt, wie aus der EU-Verordnung 2020/1149 hervorgeht.

In der Patentliteratur werden Verfahren zur Herstellung von monomerarmen reaktiven Polyurethanschmelzklebstoffen auf Basis von MDI beschrieben (siehe beispielsweise WO 03/055929 A1, WO 01/40342 A1, WO 03/033562 A1, WO 03/006521 A1).

Es werden des Weiteren Verfahren zur Silanisierung von Polyurethanschmelzklebstoffen beschrieben, die eine isocyanatfreie Alternative darstellen. Bei diesem Verfahren werden in der Regel feuchtigkeitsvernetzende Di- bzw. Trialkoxysilaneinheiten eingeführt. Eine Möglichkeit zur Herstellung stellt die Umsetzung der Isocyanatgruppen reaktiver Polyurethanschmelzklebstoffe mit sekundären Aminosilanen dar (z. B. WO 2004/005420 A1). Zur Beschleunigung der Vernetzungsreaktion werden in der Regel Aminosilane, Zinnbeschleuniger und/ oder starke Stickstoffbasen (z. B. 1,8-Diazabicyclo[5.4.0]undec-7-en) eingesetzt. Nachteil dieses Verfahrens ist, dass diese Beschleuniger gleichzeitig die Hydrolyse der in reaktiven Polyurethanschmelzklebstoffen meist enthaltenen Estereinheiten fördern können. Auch sind die so erhaltenen Formulierungen in der Regel nicht mehr ausreichend stabil, um auf Walzenauftragsmaschinen verarbeitet werden zu können. Reaktive Schmelzklebstoffe werden häufig über Walzenauftragsmaschinen verarbeitet und sind oftmals der Umgebungsfeuchte ausgesetzt. Die Formulierungen müssen demzufolge ausreichend stabil sein und dürfen auch bei kurzzeitigen Anlagenstillständen nicht so weit mit der Umgebungsfeuchte reagieren, dass ein signifikanter Anstieg der Auftragsmenge und ein Fadenzug entstehen, wobei letzterer das Auftragsbild negativ beeinträchtigt.

Stabile Schmelzklebstoffformulierungen auf Basis Silan-terminierter Polymere stellen eine interessante Klebstoffklasse dar. Des Weiteren haben solche silanfunktionellen Klebstoffe ein breites Haftungsspektrum, was beispielsweise im Vergleich zu isocyanatvernetzenden Systemen einen Vorteil darstellen kann. Da bei silanterminierten Polymeren eine Silangruppe in der Regel zwei bis drei Kondensationsreaktionen eingehen kann, ist auch eine höhere Vernetzungsdichte zu strukturell vergleichbaren isocyanatbasierten Bindemitteln möglich. Hierbei wäre es vorteilhaft, dass diese sich unter anderem prozesssicher bei hohen Temperaturen zum Teil über Auftragswalzen verarbeiten lassen und eine für diese Anwendung typisch hohe Anfangshaftung sowie eine für industrielle Anwendungen akzeptable chemische Durchhärtung aufweisen.

Im Zuge dieser Entwicklung wurden zur Herstellung Silan-basierter Formulierungen zwei Wege verfolgt. Neben der oben näher beschriebenen Silanisierung bestehender reaktiver PUR Schmelzklebstoffe, bei der deren Isocyanatgruppen mit sekundären Aminosilanen chemisch umgesetzt werden, erfolgt zum anderen eine Formulierung kommerziell erhältlicher Silanbindemittel mit kristallinen oder amorphen Harzen zur Realisierung einer hohen Anfangshaftung. So beschreibt zum Beispiel WO 2007/074143 A1 feuchtigkeitshärtende Heißschmelzklebstoffzusammensetzungen mit Hilfe silanfunktionalisierter Polyurethanprepolymere.

WO 2013/026654 A1 beschreibt vernetzbare Massen auf Basis von Organyloxysilan-terminierten Polymeren. Hierbei werden ebenso wie in DE 10 2013 213 835 A1 Abmischungen aus alpha-Silanen, wie zum Beispiel Geniosil^{®} STP-E10 und Siliconharzen beschrieben.

WO 2011/087741 A2 beschreibt Klebstoffe zum Binden von Büchern und verwandten Gegenständen und die Herstellung solcher Klebstoffe mit Silan-modifizierten flüssigen Polymeren. Insbesondere sollen die Klebstoffe einen verringerten Gehalt an monomeren Diisocyanaten oder keinen Gehalt an monomeren Diisocyanaten aufweisen.

Das Resultat war in beiden Fällen zunächst nicht zufriedenstellend. Die erhaltenen Formulierungen hatten eine zu geringe Anfangshaftung, waren nicht walzenstabil oder zu langsam durchhärtend.

WO2014/018349A1 offenbart eine reaktive Heißschmelzklebstoffzusammensetzung enthaltend, bezogen auf das Gesamtgewicht der Zusammensetzung, a) 40 Gew.-% eines Silan-terminierten organischen Polyethers; b) 20 Gew.-% eines Acrylatharz basierten Polymers; c) 6 Gew.-% eines Klebrigmachers KE-100; und d) 0,1 Gew.-% eines niedermolekularen aminogruppenaufweisenden Silans Silquest A1110.

Zur Verbesserung der Anfangshaftung kommen unter anderem Polyester- und Polyacrylatharze in Betracht. Bei Polyesterharzen besteht die Gefahr des Abbaus durch Hydrolyse, welche durch die für Silanklebstoffe typischen Beschleuniger, wie zum Beispiel durch Aminosilane, katalysiert wird. Geeignete kristalline Polyacrylatharze müssen dagegen bei sehr hohen Temperaturen (ca. 150 °C) aufgeschmolzen werden. Bei diesen Temperaturen sind kommerziell erhältliche polyetherbasierende Silanbindemittel jedoch nicht stabil.

Eine Aufgabe der vorliegenden Erfindung war daher, reaktive Schmelzklebstoffzusammensetzungen bereitzustellen, die die oben genannten Nachteile nicht oder zumindest in geringerem Maße aufweisen.

Die Aufgabe wurde gelöst durch eine reaktive Heißschmelzklebstoffzusammensetzung bezogen auf das Gesamtgewicht der Zusammensetzung enthaltend
a) 3 Gew.-% bis 49 Gew.-% mindestens eines alpha-Silan-terminierten organischen Polymers;
b) 1 Gew.-% bis weniger als 20 Gew.-%, vorzugsweise 1 Gew.-% bis 10 Gew.-%, mindestens eines Acrylatharz basierten Polymers;
c) 1 Gew.-% bis 20 Gew.-%, vorzugsweise 1 Gew.-% bis 10 Gew.-%, mindestens einer zumindest bei 100 °C flüssigen chemischen Verbindung, in der sich zumindest bei 150 °C das mindestens eine Acrylatharz basierte Polymer löst;
d) 0,001 Gew.-% bis 5 Gew.-%, vorzugsweise 0,001 Gew.-% bis 2 Gew.-%, mindestens eines eine oder mehrere Aminogruppen enthaltenden oligomeren Silans.

Die Aufgabe wurde ebenfalls gelöst durch ein Verfahren zur Herstellung einer reaktiven Heißschmelzklebstoffzusammensetzung nach der vorliegenden Erfindung die Schritte enthaltend
(a) Hinzufügen von mindestens einem Acrylatharz basierten Polymer zu mindestens einer zumindest bei 100 °C flüssigen chemischen Verbindung, in der sich zumindest bei 150 °C das mindestens eine Acrylatharz basierte Polymer löst, oder Hinzufügen zu einer Mischung, die die mindestens eine chemische Verbindung enthält, bei einer Temperatur im Bereich von 130 °C bis 170 °C;
(b) Abkühlen der Mischung auf eine Temperatur im Bereich von 80°C bis 120 °C;
(c) Hinzufügen mindestens eines alpha-silan-terminierten organischen Polymers zu der abgekühlten Mischung;
(d) Hinzufügen mindestens eines eine oder mehrere Aminogruppen enthaltenden oligomeren Silans, wobei eine reaktive Heißschmelzklebstoff-zusammensetzung nach der vorliegenden Erfindung erhalten wird.

Die Aufgabe wurde ebenfalls gelöst durch ein Verfahren zur Flächenkaschierung den Schritt des Auftragens einer reaktiven Heißschmelzklebstoffzusammensetzung nach der vorliegenden Erfindung auf einem Substrat mit Hilfe einer Auftragswalze enthaltend.

Die Anforderung eines walzenstabilen Klebstoffes bei Verarbeitungstemperaturen von 100-120 °C mit einer vertretbaren Durchhärtungsgeschwindigkeit konnte überraschenderweise mit Bindemitteln auf Basis silanterminierter Polymere (sogenannte alpha-Silane) realisiert werden, wobei ein Acrylatharz basiertes Polymer zum Einsatz kommen konnte, das mit Hilfe einer zumindest bei 100 °C flüssigen chemischen Verbindung zumindest bei 150 °C gelöst werden kann, sowie mit Hilfe mindestens eines eine oder mehrere Aminogruppen enthaltenden oligomeren Silans. Auf diese Weise konnten hydrolysestabile Formulierungen mit einer zufriedenstellenden Anfangshaftung hergestellt werden. Des Weiteren weisen die erfindungsgemäßen reaktiven Heißschmelzklebstoffzusammensetzungen hohe Vernetzungsdichten auf, was eine gute Weichmacherbeständigkeit begründen kann.

Dementsprechend stellt die reaktive Heißklebstoffzusammensetzung nach der vorliegenden Erfindung eine bei 100 °C niedrigviskose und weitgehend walzenstabile feuchtigkeitsvernetzende Klebstoffformulierung auf Basis alpha-Silan terminierter Polymere dar, die bei Raumtemperatur eine für Flächenkaschierungen ausreichend hohe Anfangshaftung aufweisen und chemisch hinreichend schnell durchhärten. Bei der Aushärtung wird durch eine Kondensationsreaktion Alkohol (insbesondere Methanol, ggf. auch Ethanol) unter Ausbildung von Siloxangruppen abgespalten.

Genauer betrachtet findet bei alpha-Silanen bekanntermaßen eine zweistufige Kondensationsreaktion von Alkoxysilanen durch das in alpha-Stellung zum Siliziumatom befindliche Donoratom (beispielsweise Stickstoffatom) weitgehend autokatalytisch statt (alpha-Effekt). Die reaktiven Heißschmelzklebstoffzusammensetzungen nach der vorliegenden Erfindung werden durch Aminosilane beschleunigt und kommen ohne den Einsatz weiterer Co-Katalysatoren wie zum Beispiel Zinnorganyle oder Diazabicycloundecen aus. Überraschenderweise hat sich im Zuge dieser Erfindung gezeigt, dass Formulierungen mit einem alpha-Silan über einen Zeitraum von ca. 30-60 Minuten bei 100 °C ohne Einhausung bei üblichem Raumklima (Raumtemperatur ca. ca. 20-23 °C, Raumluftfeuchte ca. 30-65 % r. LF.) walzenstabil sind und trotz der moderaten Beschleunigung und ohne den Einsatz weiterer Co-Katalysatoren chemisch hinreichend schnell durchhärten.

Die vorliegende Erfindung betrifft demgemäß eine reaktive Heißschmelzklebstoffzusammensetzung. Der Begriff "Heißschmelzklebstoff" umschreibt dabei einen Klebstoff, der bei Raumtemperatur fest ist bzw. ein hohes Schubmodul aufweist und bei erhöhter Temperatur, meist bei einer Temperatur von 100 °C bis 120 °C in flüssiger Form vorliegt. In flüssiger Form werden Heißschmelzklebstoffe appliziert und erstarren wieder, so dass diese bei Raumtemperatur wieder in fester Form vorliegen bzw. ein hohes Schubmodul aufweisen. Darüber hinaus zeichnen sich "reaktive" Heißschmelzklebstoffe dadurch aus, dass diese durch chemische Reaktion vernetzten. Hierbei erfolgt meist eine Reaktion mit Wasser, das beispielsweise als Luftfeuchtigkeit mit dem Heißschmelzklebstoff in Kontakt kommt. Diese werden daher als feuchtigkeitsvernetzend bezeichnet. Dies trifft auch auf die reaktiven Heißklebstoffzusammensetzungen der vorliegenden Erfindung zu.

Die reaktive Heißklebstoffzusammensetzung der vorliegenden Erfindung ist ebenfalls bei einer Temperatur von 100 °C bis 120 °C flüssig. Hierbei weisen diese üblicherweise eine Viskosität von 4000 mPas bis 12000 mPas auf. Vorzugsweise ist erfindungsgemäße reaktive Heißklebstoffzusammensetzung isocyanatfrei.

Die reaktive Heißschmelzklebstoffzusammensetzung nach der vorliegenden Erfindung enthält die Komponenten a) bis d). Darüber hinaus kann die erfindungsgemäße Zusammensetzung weitere Bestandteile aufweisen. Dementsprechend betrifft eine Ausführungsform der vorliegenden Erfindung eine reaktive Heißschmelzklebstoffzusammensetzung, die aus den Komponenten a) bis d) besteht. Eine weitere Ausführungsform der vorliegenden Erfindung betrifft eine reaktive Heißschmelzklebstoffzusammensetzung, die neben den Komponenten a) bis d) weiterhin eine oder mehrere, wie zwei, drei, vier, fünf, sechs, sieben, acht, neun oder zehn Komponenten aufweist.

Komponente a) der erfindungsgemäßen reaktiven Heißschmelzklebstoffzusammensetzung stellt mindestens ein alpha-Silan-terminiertes organisches Polymer dar. Demzufolge kann die reaktive Heißschmelzklebstoffzusammensetzung nach der vorliegenden Erfindung ein alpha-Silan-terminiertes Polymer aufweisen oder mehrere, wie zwei, drei oder vier, Polymere. Hierbei ist für den zuständigen Fachmann klar, dass Polymere keine Reinstoffe darstellen, sondern herstellungsbedingt als Stoffgemisch mit einer charakteristischen Stoffverteilung auftreten und dass daher "ein Polymer" vereinfachend für dieses Stoffgemisch steht.

Alpha-Silan-terminierte organische Polymere sind dem Fachmann bekannt und können beispielsweise kommerziell erhalten werden. So vertreibt die Firma Wacker Chemie AG, München (DE) solche alpha-Silan modifizierten Polymere unter der Bezeichnung Geniosil^{®}, wie Geniosil^{®} STP-E10 oder Geniosil^{®} XB 502.

Alpha-Silane kennzeichnen sich durch den so genannten alpha-Effekt. Bei diesem bewirkt die Nachbarschaft eines elektronegativen Donors, wie Stickstoff oder Sauerstoff, in alpha-Stellung zum Silicium-Atom, also beispielsweise nur durch eine Methylenbrücke davon getrennt, eine Aktivierung von Alkoxygruppen am Silicium-Atom. Diese sind dadurch gegenüber Nukleophilen, wie Wasser, reaktiver. Dies wiederum bewirkt eine beschleunigte Hydrolyse, ohne dass beispielsweise zinnhaltige Katalysatoren erforderlich wären. Die Hydrolyse der Silane kann unter Vernetzung zu Siloxanen erfolgen. Insoweit stellen reaktive Heißschmelzklebstoffzusammensetzungen der vorliegenden Erfindung alpha-Silan-terminierte Schmelzklebstoffe dar, die feuchtigkeitsvernetzend zu Siloxanen reagieren können.

Vorzugsweise handelt es sich bei dem mindestens einen alpha-Silan-terminierten organischen Polymer um ein Polymer, das eine Vielzahl von Endgruppen der Formel

*-X-C(=O)-N(R)-C(R¹R²)-Si(R³)ₐ(OR⁴)₃₋ₐ

aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 0, 1 oder 2 steht und
"*" die Bindung für die Anbindung an das Polymer kennzeichnet.

Mehr bevorzugt steht R für Wasserstoff oder einen Alkylrest, der 1 bis 4 Kohlenstoffatome aufweist, wobei der Alkylrest geradkettig oder verzweigt sein kann. Weiter mehr bevorzugt handelt es sich bei R um H, Methyl oder Ethyl, weiter mehr bevorzugt um Wasserstoff oder Methyl.

Insbesondere bevorzugt ist R Wasserstoff.

Mehr bevorzugt sind R¹ und R² gleich. Weiterhin mehr bevorzugt sind R¹ und R² Wasserstoff oder ein Alkylrest, der 1 bis 4 Kohlenstoffatome aufweist, wobei der Alkylrest geradkettig oder verzweigt sein kann. Weiter mehr bevorzugt handelt es sich bei R¹ und R² um H, Methyl oder Ethyl, weiter mehr bevorzugt um Wasserstoff oder Methyl.

Insbesondere bevorzugt sind R¹ und R² Wasserstoff.

Mehr bevorzugt sind R³ und R⁴ gleich. Weiterhin mehr bevorzugt sind R³ und R⁴ ein Alkylrest, der 1 bis 4 Kohlenstoffatome aufweist, wobei der Alkylrest geradkettig oder verzweigt sein kann. Weiter mehr bevorzugt handelt es sich bei R³ und R⁴ um Methyl oder Ethyl.

Insbesondere bevorzugt sind R³ und R⁴ Methyl.

Vorzugsweise ist a =1 oder 2, mehr bevorzugt ist a = 1.

Ein beispielhaftes mindestens ein alpha-Silan-terminiertes organisches Polymer ist ein Polymer, das eine Vielzahl von Endgruppen der Formel *-O-C(=O)-NH-CH₂-Si(CH₃)(OCH₃)₂ aufweist.

Die Vielzahl der oben näher beschriebenen Endgruppen terminiert ein organisches Polymer. Vorzugsweise handelt es sich bei dem organischen Polymer um ein Polyoxyalkylen, ein Kohlenwasserstoffpolymer, ein Polyurethan, ein Polyester, ein Polyamid, ein Polyacrylat, ein Polymethacrylat oder ein Polycarbonat. Bevorzugt ist Polyoxyalkylen. Vorzugsweise enthält das organische Polymer über die oben aufgeführten Endgruppen keine weiteren Silangruppen.

Bevorzugte Polyoxyalkylene sind Polypropylene, beispielsweise mit einem zahlengemittelten Molekulargewicht im Bereich von 5000 g/mol bis 50.000 g/mol, mehr bevorzugt von 7500 g/mol bis 30.000 g/mol, mehr bevorzugt von 10.000 g/mol bis 15.000 g/mol.

Die Komponente a) weist einen Anteil von 3 Gew.-% bis 49 Gew.-% bezogen auf das Gesamtgewicht der Zusammensetzung auf. Vorzugsweise beträgt der Anteil 3 bis 20 Gew.-%, mehr bevorzugt 5 bis 20 Gew.-%.

Weiterhin weist die reaktive Heißschmelzklebstoffzusammensetzung nach der vorliegenden Erfindung mindestens ein Acrylatharz basiertes Polymer als Komponente b) auf. Dementsprechend kann die erfindungsgemäße Zusammensetzung ein oder mehrere, wie zwei, drei oder vier, Acrylat basierte Polymere aufweisen. Hierbei ist für den zuständigen Fachmann klar, dass Polymere keine Reinstoffe darstellen, sondern herstellungsbedingt als Stoffgemisch mit einer charakteristischen Stoffverteilung auftreten und dass daher "ein Polymer" vereinfachend für dieses Stoffgemisch steht. Vorzugsweise besteht die Komponente b) nur aus einem Acrylharz basierten Polymer.

Sofern Komponente a) als organisches Polymer ebenfalls ein Acrylatharz basiertes Polymer ist, lassen sich die Komponenten a) und b) dadurch unterscheiden, dass Komponente b) keine alpha-Silan terminierten Gruppen aufweist.

Vorzugsweise handelt es sich bei dem Acrylat-basierten Polymer um ein Homoacrylat, ein Homomethacrylat, ein Copolymer aus mindestens zwei unterschiedlichen Acrylaten, ein Copolymer aus mindestens zwei unterschiedlichen Methacrylaten oder ein Copolymer aus mindestens einem Acrylat und mindestens einem Methacrylat.

Der Anteil der Komponente b) beträgt 1 Gew.-% bis 20 Gew.-% bezogen auf das Gesamtgewicht der erfindungsgemäßen reaktiven Heißschmelzklebstoffzusammensetzung. Vorzugsweise beträgt der Anteil 1 Gew.-% bis 10 Gew.-%. Weiter bevorzugt beträgt der Anteil 8 Gew.-% bis 9 Gew.-%.

Komponente b) dient dazu, eine ausreichende Anfangshaftung zu erreichen. Hierbei wird insbesondere ein Copolymer bestehend aus Methylmethacrylat und n-Butylmethacrylat bevorzugt.

Das mindestens eine Acrylatharz basierte Polymer kann kristallin, teilweise kristallin oder amorph sein und weist somit einen Schmelzpunkt, Schmelzbereich (hier wird der untere Temperaturpunkt als Schmelzpunkt angesehen) oder eine Glasübergangstemperatur auf. Vorzugsweise liegt diese Temperatur in einem Bereich von 30 °C bis 300 °C, mehr bevorzugt in einem Bereich von 30 °C bis 250 °C, weiter mehr bevorzugt in einem Bereich von 30°C bis 150 °C, weiter mehr bevorzugt in einem Bereich von 30 °C bis 80 °C, weiter mehr bevorzugt in einem Bereich von 40 °C bis 75 °C, weiter mehr bevorzugt in einem Bereich von 50 °C und 70 °C und insbesondere bei 60 °C. Vorzugsweise ist das mindestens eine Acrylatharz basierte Polymer amorph, so dass sich dann die angegebenen Temperaturwerte auf dessen Glasübergangstemperatur beziehen.

Vorzugsweise weist das mindestens eine Acrylatharz basierte Polymer ein mittleres gewichtsgemitteltes Molgewicht im Bereich von 10.000 g/mol bis 150.000 g/mol auf. Mehr bevorzugt ist ein Bereich von 25.000 g/mol bis 125.000 g/mol, weiter mehr bevorzugt ein Bereich von 30.000 g/mol bis 110.000 g/mol, weiter mehr bevorzugt ein Bereich von 35.000 g/mol bis 100.000 g/mol, weiter mehr bevorzugt ein Bereich von 40.000 g/mol bis 90.000 g/mol, weiter mehr bevorzugt ein Bereich von 45.000 g/mol bis 80.000 g/mol, weiter mehr bevorzugt ein Bereich von 50.000 g/mol bis 70.000 g/mol und insbesondere liegt das mittlere gewichtsgemittelte Molgewicht bei 60.000 g/mol.

Als Komponente c) enthält die reaktive Heißschmelzklebstoffzusammensetzung mindestens eine zumindest bei 100 °C flüssige chemische Verbindung, in der sich zumindest bei 150 °C das mindestens eine Acrylatharz basierte Polymer löst.

Im Rahmen der vorliegenden Erfindung ist unter "zumindest bei 150 °C gelöst" das Auflösen festen Acrylharz basiertem Polymer zu verstehen. Das Lösen kann jedoch auch bereits bei tieferer Temperatur erfolgen. Sofern der Schmelzpunkt, -bereich oder die Glasübergangstemperatur unterhalb 150 °C liegt, ist unter "gelöst" das Herstellen einer einphasigen Mischung mit der chemischen Verbindung zu verstehen.

Die Komponente c) kann eine chemische Verbindung oder mehrere, wie zwei, drei oder vier, Verbindungen aufweisen. Vorteilhafterweise weist diese nur eine Verbindung auf. Die Komponente c) ist unterschiedlich zu den Komponenten a) oder b). Insofern ist eine Verbindung der Komponente c) zuzurechnen, wenn diese in der Lage ist, Komponente b) zumindest bei 150 °C im Rahmen ihrer möglichen Anteile an der Gesamtzusammensetzung zu lösen und dabei selbst zumindest bei 100 °C flüssig vorzuliegen und diese sich von den Komponenten a) und b) unterscheidet.

Der Anteil an Komponente c) beträgt 1 Gew.-% bis 20 Gew.-% bezogen auf das Gesamtgewicht der erfindungsgemäßen reaktiven Heißklebstoffzusammensetzung. Vorzugsweise beträgt der Anteil 1 Gew.-% bis 10 Gew.-%. Mehr bevorzugt beträgt der Anteil 6 Gew.-%.

Für die chemische Verbindung ist neben deren Lösevermögen lediglich bedeutend, dass diese zumindest bei 100 °C als Flüssigkeit vorliegt. Zahlreiche Verbindungen können eingesetzt werden und der Fachmann ist in der Lage durch einfache Löseversuche geeignete Verbindungen aufzufinden. Nachfolgend sind beispielhafte Verbindungen aufgeführt, die eingesetzt werden können.

Vorteilhafterweise kann es sich bei der mindestens einen zumindest bei 100 °C flüssigen chemischen Verbindung, in der sich zumindest bei 150 °C das mindestens eine Acrylatharz basierte Polymer löst, um einen Weichmacher handeln.

Beispielhafte Weichmacher sind im Stand der Technik bekannt. Es sei hierbei auf die in DIN EN ISO 1043-3 (2017-03) aufgeführten Beispiele verwiesen.

Beispiele für Weichmacher sind also:

| | | |
|---|---|---|
| Alkylsulfonsäureester | Diisooctylmaleat | N-Butylbenzolsulfonamid |
| Butyl-*O*-acetylrizinoleat | Diisooctylphthalat | Nonylundecyladipat |
| Benzylbutylphthalat | Diisooctylsebazat | Nonylundecylphthalat |
| Butylcyclohexylphthalat | Diisooctylazelat | Octyldecyladipat |
| Butylnonylphthalat | Diisopentylphthalat | Octyldecylphthalat |
| Benzyloctyladipat | Di-2-Methyloxyethylphthalat | n-Octyldecyltrimellitat |
| Butyloctylphthalat | Dimethylphthalat | Paraffinöl |
| Butylstearat | Dimethylsebazat | Polypropylenadipat |
| Dibutyladipat | Dinonylfumarat | Polypropylensebazat |
| Di-2-Butoxyethylphthalat | Dinonylmaleat | Sucroseoctaacetat |
| Dibutylfumarat | Di-n-octylphthalat | Tributyl-O-acetylcitrat |
| Dibutylmaleat | Dinonylphthalat | Tri-2-Butoxyethylphosphat |
| Dibutylphthalat | Dinonylsebazat | Tributylphosphat |
| Dibutylsebazat | Dioctyladipat | Trichlorethylphosphat |
| Dibutylazelat | Dioctylisophthalat | Trikresylphosphat |
| Dicyclohexylphthalat | Dioctylphthalat | Tri-2,3-dibrompropylphosphat |
| Dicaprylphthalat | Dioctylsebazat | Tri-2,3-dichlorpropylphosphat |
| Didecylphthalat | Dioctylterephthalat | Triethyl-o-acetylcitrat |
| Diethylenglycoldibenzoat | Dioctylazelat | Tetrahydrofurfuryloleat |
| Diethylphthalat | Diphenylkresylphosphat | Triheptyltrimellitat |
| Diheptylphthalat | Di-Propylenglycoldibenzoat | Triisooctyltrimellitat |
| Dihexylphthalat | Diphenyloctylphosphat | Trioctylphosphat |
| Diisobutyladipat | Diphenylphthalat | Tetraoctylpyromellitat |
| Diisobutylmaleat | Diisotridecylphthalat | Trioctyltrimellitat |
| Diisobutylphthalat | Diundecylphthalat | Triphenylphosphat |
| Diisodecyladipat | Epoxidiertes Leinsamenöl | Trixylylphosphat |
| Diisodecylphthalat | Epoxidiertes Sojabohnenöl | 1,2-Cyclohexandicarbonsäurediisononylester |
| Diisoheptylphthalat | Glycerintriacetat | Isodecylbenzoat |
| Diisohexylphthalat | Heptylnonylundecyladipat | |
| Diisononyladipat | Heptylnonylundecylphthalat | |
| Diisononylphthalat | Hexyloctyldecyladipat | |
| Diisooctyladipat | Hexyloctyldecylphthalat | |

Solche Weichmacher sind kommerziell erhältlich. Beispielhaft sei Hexamoll^{®} DINCH der Firma BASF SE, Ludwigshafen (DE) genannt. Bevorzugt sind 1,2-Cyclohexandicarbonsäure-diisononylester oder Isodecylbenzoat.

Ebenso ist es möglich, dass es sich bei der mindestens einen zumindest bei 100 °C flüssigen chemischen Verbindung, in der sich zumindest bei 150 °C das mindestens eine Acrylat-harz basierte Polymer löst, um ein Polyalkylenglykol handeln. Bevorzugte Polyalkylenglykole sind Polyethylenglykol und Polypropylenglykol, mehr bevorzugt Polypropylenglykol. Vorzugsweise weist das Polyalkylenglykol ein zahlengemitteltes Molekulargewicht im Bereich von 500 g/mol bis 5000 g/mol auf, mehr bevorzugt im Bereich von 750 g/mol bis 4000 g/mol, mehr bevorzugt im Bereich von 1000 g/mol bis 3000 g/mol, insbesondere liegt das zahlengemittelte Molekulargewicht bei 2000 g/mol.

Ebenso ist es möglich, dass es sich bei der mindestens einen zumindest bei 100 °C flüssigen chemischen Verbindung, in der sich zumindest bei 150 °C das mindestens eine Acrylat-harz basierte Polymer löst, um ein Alkoxysilan handelt. Alkoxysilane sind kommerziell erhältlich. Als Bespiel sei das von der Firma Evonik Industries AG, Essen (DE) mit der Handelsbezeichnung Tegopac^{®} aufgeführt. Hierbei handelt es sich um ein Bindemittel mit seitenständig vernetzendenden Ethoxysilanen.

Die erfindungsgemäße reaktive Heißschmelzklebstoffzusammensetzung enthält weiterhin eine Komponente d), die mindestens ein eine oder mehrere Aminogruppen enthaltendes oligomeres Silan enthält. Somit kann die Komponente d) ein oder mehrere, wie zwei, drei oder vier, solcher Silane aufweisen. Vorzugsweise besteht die Komponente d) nur aus einer Komponente. Die Komponente d) ist unterschiedlich zu den Komponenten a) bis c) und zählt nur insofern zu Komponente d), soweit diese nicht als eine der Komponenten a) bis c) aufgefasst werden kann.

Das mindestens eine eine oder mehrere Aminogruppen enthaltende oligomere Silan der Komponente d) stellt vorzugsweise ein Gemisch Aminogruppen-haltiger Alkoxy-/Hydroxy-Silane und/oder Silanole sowie darauf basierender Kondensations- und Cokondensationsprodukte dar und weist vorzugsweise ein Molekulargewicht von mehr als 500 g/mol.

Solche eine oder mehrere Aminogruppen enthaltende oligomere Silane sind kommerziell erhältlich, zum Beispiel als Dynasylan^{®} 1146 der Firma Evonik. Diese sind beispielsweise in DE 10 2007 040 802 A1 beschrieben. Demzufolge kann deren Herstellung wie folgt beschrieben werden.

Wie bereits oben ausgeführt wurde handelt es sich bei dem mindestens einen eine oder mehrere Aminogruppen enthaltenden oligomeren Silan um ein Gemisch das erhalten werden kann, indem man
(A) mindestens ein Aminoalkylalkoxysilan der allgemeinen Formel I

   NR'₂[(CH₂)₂NR']ₓ -Y-Si(R")ₙ (OR)₃₋ₙ (I),

   worin Gruppen R, R' und R" gleich oder verschieden sind und jeweils für ein Wasserstoffatom oder für eine lineare oder verzweigte Alkylgruppe mit 1 bis 8 C-Atomen stehen, Y eine bivalente Alkylengruppe aus der Reihe -CH₂-, -(CH₂)₂ -, -(CH₂)₃- oder -[CH₂CH(CH₃)CH₂]- darstellt, x gleich 0, 1 oder 2 und n gleich 0 oder 1 sind, oder
(B) mindestens ein bis-silyliertes Alkylamin der allgemeinen Formel II

   (RO)₃₋ₘ(R")ₘSi-Y-[NR'(CH₂)₂]_{y}NR'[(CH₂)₂NR']_{z}-Y-Si(R")ₙ(OR)₃₋ₙ (II),

   worin Gruppen R, R' und R" gleich oder verschieden sind und jeweils für ein Wasserstoffatom oder für eine lineare oder verzweigte Alkylgruppe mit 1 bis 8 C-Atomen stehen, Gruppen Y gleich oder verschieden sind und Y eine bivalente Alkylengruppe aus der Reihe -CH₂-, -(CH₂)₂-, -(CH₂)₃- oder -[CH₂CH(CH₃)CH₂]- darstellt, y und z unabhängig gleich 0, 1 oder 2 sowie m und n unabhängig gleich 0 oder 1 sind, oder
(C) mindestens ein tris-silyliertes Alkylamin der allgemeinen Formel III

   N[-Y-Si(R")ₙ(OR)₃₋ₙ]₃ (III),

   worin Gruppen R und R" gleich oder verschieden sind und jeweils für ein Wasserstoffatom oder für eine lineare oder verzweigte Alkylgruppe mit 1 bis 8 C-Atomen stehen, Y unabhängig eine bivalente Alkylengruppe aus der Reihe -CH₂-, -(CH₂)₂-, -(CH₂)₃- oder -[CH₂CH(CH₃)CH₂ ]- darstellt und n unabhängig gleich 0 oder 1 ist, oder
(D) mindestens zwei der zuvor genannten silylierten Alkylamine der allgemeinen Formel I, II sowie III mit einer definierten Menge an Wasser und optional unter Zusatz einer Säure hydrolysiert sowie kondensiert bzw. cokondensiert und den freien Alkohol im Wesentlichen aus dem System entfernt.

Hierbei sollen unter mono-silylierten Aminen solche gemäß der Formel I verstanden werden. Unter oligo-silylierten Aminen sind insbesondere solche zu verstehen, die zwei und mehr als zwei Silylgruppen an einer Aminogruppe bzw. Alkylamin tragen, beispielsweise gemäß Formel II (bis-silyliert) oder Formel III (tris-silyliert) und/oder entsprechende Verbindungen, die auch cyclisiert vorliegen können.

Bei der Herstellung des Gemisches setzt man als Aminoalkylalkoxysilane der allgemeinen Formel I bevorzugt

H₂N(CH₂)₃Si(OCH₃)₃ (AMMO),

H₂N(CH₂)₃Si(OC₂H₅)₃ (AMEO),

H₂N(CH₂)₂NH(CH₂)₃Si(OCH₃)₃ (DAMO),

H₂N(CH₂)₂NH(CH₂)₂NH(CH₂)₃Si(OCH₃)₃ (TRIAMO),

sowie ggf. hierzu entsprechende s. g. cyclische Verbindungen ein.

Als Verbindungen gemäß Formel II bevorzugt man

(H₃CO)₃Si(CH₂)₃NH(CH₂)₃Si(OCH₃)₃ (Bis-AMMO),

(H₅C₂O)₃Si(CH₂)₃NH(CH₂)₃Si(OC₂H₅)₃ (Bis-AMEO),

(H₃CO)₃Si(CH₂)₃NH(CH₂)₂NH(CH₂)₂NH(CH₂)₃Si(OCH₃)₃ (Bis-DAMO),

(H₃CO)₃Si(CH₂)₃NH(CH₂)₂NH(CH₂)₂NH(CH₂)₂NH(CH₂)₂NH(CH₂)₃Si(OCH₃)₃ (Bis-TRIAMO),

sowie als Verbindungen gemäß Formel III

N[CH₂)₃Si(OCH₃)₃]₃ (Tris-AMMO),

N[CH₂)₃Si(OC₂H₅)₃]₃ (Tris-AMEO).

So wählt man für die Herstellung des Gemisches bevorzugt mindestens eine Komponente (A) aus der Reihe AMMO, AMEO, DAMO, TRIAMO, 3-(N-Alkylamino)propyltrialkoxysilan, wobei Alkyl Methyl, Ethyl, n-Propyl oder n-Butyl sowie Alkoxy Methoxy oder Ethoxy bedeutet, eine bevorzugte Auswahl der Komponente (B) kann aus der Reihe Bis-AMMO, Bis-AMEO, Bis-DAMO sowie Komponente (C) aus der Reihe Tris-AMMO, Tris-AMEO erfolgen.

Ebenfalls kann man zur Herstellung des Gemisches Mischungen, die Verbindungen der allgemeinen Formeln I, II, und/oder III enthaltend, vorteilhaft einsetzen. Auch können solche einsetzbaren Gemische so genannte Ankondensationsprodukte besagter Aminoalkoxysilane enthalten. Unter Ankondensationsprodukten bzw. Reaktionsprodukten von Aminoalkoxysilanen der allgemeinen Formeln I, II und/oder III werden geeigneterweise solche dimeren, trimeren, tetrameren oder höheren oligomeren Produkte verstanden, die in der Regel durch Kondensation bzw. Cokondensation und/oder Vorhydrolyse der jeweiligen Monomeren unter Abspaltung von Alkohol entstehen. In entsprechenden Kondensaten bzw. Cokondensaten sind somit die Eduktkomponenten über Si-O-Si-Bindungen verknüpft. Es ist ferner bekannt, dass ein Cyclus bei Hydrolyse oder Alkoholyse öffnet und das entsprechende Aminoalkylalkoxysilan bzw. -silanol erhalten wird. Ebenso können Verbindungen der allgemeinen Formel II in cyclischer bzw. bicyclischer Form vorliegen und als solche eingesetzt werden.

Bei der Umsetzung entsteht nach chemischem Verständnis im Wesentlichen ein Gemisch Aminogruppen-haltiger Alkoxy-/Hydroxy-Silane und/oder Silanole sowie darauf basierender Kondensations- und Cokondensationsprodukte (entsprechende lineare, verzweigte, cyclische sowie ggf. raumvernetzte Siloxane) ausgehend von Verbindungen der allgemeinen Formeln I, II oder III und/oder entsprechender Ankondensationsprodukte.

Bevorzugt führt man bei der Herstellung des Gemisches die Umsetzung, insbesondere Hydrolyse sowie Kondensation bzw. Cokondensation, bei einer Temperatur < 100°C, vorzugsweise von 10 bis 80°C, besonders bevorzugt von 15 bis 60°C, insbesondere von 20 bis 50°C, durch.

Optional kann man bei der Herstellung des Gemisches eine organische oder anorganische Säure einsetzen. So kann man vorteilhaft Chlorwasserstoffsäure (HCl bzw. wässrige Salzsäure) oder wässrige Essigsäure oder wässrige Ameisensäure verwenden, wobei der dadurch eingebrachte Anteil an Wasser gleichzeitig der zur erfindungsgemäß einzubringenden Wassermenge für die gezielte Hydrolyse der Alkoxysilane zuzurechnen ist. Ein Zusatz an Säure kann aber auch im Anschluss an die Herstellung des Gemisches erfolgen, wobei man bevorzugt auf einen pH-Wert von 2 bis 6, insbesondere von 3 bis 5 einstellt.

Insbesondere erfolgt der Herstellung des Gemisches eine destillative Aufarbeitung des Produktgemischs aus der Umsetzung, d. h. aus dem erhaltenen Produktgemisch destilliert man vorzugsweise unter leichtem Erwärmen und unter vermindertem Druck die unter Umgebungsbedingungen ansonsten leicht flüchtigen Bestandteile, insbesondere den Hydrolysealkohol sowie ggf. zugesetztes Löse- bzw. Verdünnungsmittel, zumindest anteilig ab. Ggf. kann man dabei die Menge an flüchtigen Bestandteilen, die aus dem System entfernt werden, durch die volumenmäßig gleiche Menge an Wasser und/oder Säure ersetzen.

So kann das Gemsich vorzugsweise einen Gehalt an organischer oder anorganischer Säure aufweisen, wobei geeigneterweise ein Neutralisationsgrad der Aminoalkyl- und oligo-silylierten Aminoalkyl-Gruppen von 0 bis 125%, vorzugsweise 0,1 bis 120%, besonders bevorzugt 70 bis 115%, ganz besonders bevorzugt 75 bis 110%, bezogen auf die Aminzahl, vorliegt. Die Bestimmung der Aminzahl kann in der Regel nach DIN 32 625 (potentiographische Titration mit HCl) durchgeführt werden.

Bevorzugt handelt es sich bei der verwendeten Säure um eine anorganische oder organische Säure, insbesondere Salzsäure, Essigsäure oder Ameisensäure, wobei die aminoalkyl- und oligo-silylierten-amionalkyl-funktionellen Siliciumverbindungen in der vorliegenden Zusammensetzung nach chemischem Verständnis zumindest anteilig als kationisches Amingemisch vorliegen, d. h. dass eine erfindungsgemäß verwendete Zusammensetzung bevorzugt einen Gehalt an Säure und/oder ein entsprechendes Salz aus Säure und einer der vorliegenden aminofunktionellen Verbindungen aufweist.

Das Gemisch kann eine Viskosität von 2 bis 1000 mPa s, vorzugsweise 3 bis 500 mPa s, besonders bevorzugt von 4 bis 250 mPa s aufweisen, wobei die Viskosität beispielsweise gemäß DIN 53 015 bestimmt werden kann.

Der Anteil der Komponente d) beträgt 0,001 Gew.-% bis 5 Gew.-% bezogen auf das Gesamtgewicht der erfindungsgemäßen Heißschmelzklebstoffzusammensetzung. Vorzugsweise beträgt der Anteil 0,001 Gew.-% bis 2 Gew.-%. Weiterhin bevorzugt beträgt der Anteil 1,2 Gew.-%.

Neben den oben aufgeführten Komponenten a) bis d) kann die erfindungsgemäße Heißklebstoffzusammensetzung weitere Komponenten enthalten.

So kann die erfindungsgemäße Heißklebstoffzusammensetzung mindestens ein Siliconharz, wie ein Phenylsilikonharz enthalten. Siliconharze sind beispielsweise in DE 10 2013 213 835 A1 beschrieben. Ein Siliconharz gilt im Rahmen der vorliegenden Erfindung als zusätzliche Komponente, sofern es sich nicht bereits um eine der oben bezeichneten Komponenten handelt.

Dementsprechend enthalten mögliche Siliconharze gemäß DE 10 2013 213 835 A1 Einheiten der Formel

R^{3'}_{c'}(R^{4'}O)_{d'}R^{5'}_{e'}SiO_{(4-c'-d'-e')/2} (II),

wobei
R^{3'} gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R^{4'} gleich oder verschieden sein kann und Wasserstoffatom oder einen einwertigen, gegebenenfalls substituierten Kohlenwasserstoffrest bedeutet,
R^{5'} gleich oder verschieden sein kann und einen einwertigen, SiC-gebundenen, gegebenenfalls substituierten aromatischen Kohlenwasserstoffrest bedeutet,
c' 0, 1, 2 oder 3 ist,
d' 0, 1, 2 oder 3, bevorzugt 0, 1 oder 2, besonders bevorzugt 0 oder 1, ist und
e' 0, 1 oder 2, bevorzugt 0 oder 1, ist,
mit der Maßgabe, dass die Summe aus c' + d' + e' kleiner oder gleich 3 ist, in mindestens einer Einheit e' verschieden 0 ist und in mindestens 40 % der Einheiten der Formel (II) die Summe c' + e' gleich 0 oder 1 ist.

Geeignete Siliconharze bestehen vorzugsweise zu mindestens 90 Gew.-% aus Einheiten der Formel (II), besonders bevorzugt ausschließlich aus Einheiten der Formel (II).

Beispiele für Reste R^{3'} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der o und der ß-Phenylethylrest.

Beispiele für substituierte Reste R^{3'} sind Halogenalkylreste, wie der 3,3,3-Trifluor-n-propylrest, der 2, 2,2,2',2',2'-Hexafluorisopropylrest und der Heptafluorisopropylrest, und Halogenarylreste, wie der o-, m- und p-Chlorphenylrest.

Bevorzugt handelt es sich bei Rest R^{3'} um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest. Es kann sich bei dem Rest R^{3'} aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste.

Bevorzugt handelt es sich bei Rest R^{3'} jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R^{4'} sind Wasserstoffatom oder die für Rest R^{3'} angegebenen Beispiele.

Bevorzugt handelt es sich bei Rest R^{4'} um ein Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R^{5'} sind die oben für R^{3'} angegebenen aromatischen Reste.

Bevorzugt handelt es sich bei Rest R^{5'} um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden Siliconharze eingesetzt, in denen mindestens 90% aller Reste R^{3'} für Methylrest, mindestens 90% aller Reste R^{4'} für Methyl-, Ethyl-, Propyl- oder Isopropylrest und mindestens 90% aller Reste R^{5'} für Phenylrest stehen.

Vorzugsweise werden Siliconharze, die mindestens 40%, besonders bevorzugt mindestens 60%, Einheiten der Formel (II) aufweisen, in denen c' gleich 0 ist, jeweils bezogen auf die Gesamtzahl an Einheiten der Formel (II).

Vorzugsweise werden Siliconharze eingesetzt, die, jeweils bezogen auf die Gesamtzahl an Einheiten der Formel (II), mindestens 70%, besonders bevorzugt mindestens 80%, Einheiten der Formel (II) aufweisen, in denen d' für den Wert 0 oder 1 steht.

Vorzugsweise werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 steht. Es können Siliconharze eingesetzt werden, die ausschließlich Einheiten der Formel (II) aufweisen, in denen e' gleich 1 ist, aber besonders bevorzugt weisen mindestens 10%, besonders bevorzugt mindestens 20%, höchstens 60%, besonders bevorzugt höchstens 80%, der Einheiten der Formel (II) ein e' von 0 auf.

Vorzugsweise werden Siliconharze eingesetzt, die, jeweils bezogen auf die Gesamtzahl an Einheiten der Formel (II), mindestens 50%, besonders bevorzugt mindestens 70%, insbesondere mindestens 80%, Einheiten der Formel (II) aufweisen, in denen die Summe c' + e' gleich 1 ist.

In einer besonders bevorzugten Ausführung der Erfindung werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c' für den Wert 0 steht. Vorzugsweise weisen dabei höchstens 40%, besonders bevorzugt höchstens 70% aller Einheiten der Formel (II) ein d' ungleich 0 auf.

In einer weiteren besonders bevorzugten Ausführung der Erfindung werden als Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c' für den Wert 0 steht und die zudem mindestens 1 %, bevorzugt mindestens 10%, an Einheiten der Formel (II) aufweisen, in denen c' für 1 oder 2, bevorzugt für 1, und e' für 0 steht.

Beispiele für die Siliconharze sind Organopolysiloxanharze, die im Wesentlichen, vorzugsweise ausschließlich, aus (Q)-Einheiten der Formeln SiO_{4/2}, Si(OR^{4'})O_{3/2}, Si(OR^{4'})₂O_{2/2} und Si(OR^{4'})₃O_{1/2}, (T)-Einheiten der Formeln PhSiO_{3/2}, PhSi(OR⁴)O_{2/2}, PhSi(OR^{4'})₂O_{1/2}, MeSiO_{3/2}, MeSi(OR^{4'})O_{2/2} und MeSi(OR^{4'})₂O_{1/2} (D)-Einheiten der Formeln Me₂SiO_{2/2}, Me₂Si(OR^{4'})O_{1/2}, Ph₂SiO_{2/2} und Ph₂Si(OR^{4'})O_{1/2}, MePhSiO_{2/2} und MePhSi(OR^{4'})O_{1/2} sowie (M)-Einheiten der Formel Me₃SiO_{1/2} bestehen, wobei Me für einen Methylrest, Ph für einen Phenylrest und R^{4'} für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten 0-2 Mol (Q)-Einheiten, 0-2 Mol (D)-Einheiten und 0-2 Mol (M)-Einheiten enthält.

Bevorzugte Beispiele für Siliconharze sind Organopolysiloxanharze, die im Wesentlichen, vorzugsweise ausschließlich, aus T-Einheiten der Formeln PhSiO_{3/2}, PhSi(OR^{4'})O_{2/2} und PhSi(OR^{4'})₂O_{1/2}, T-Einheiten der Formeln MeSiO_{3/2}, MeSi(OR^{4'})O_{2/2} und MeSi(OR^{4'})₂O_{1/2} sowie D-Einheiten der Formeln Me₂SiO_{2/2} und Me₂Si(OR^{4'})O_{1/2} bestehen, wobei Me für einen Methylrest, Ph für einen Phenylrest und R^{4'} für ein Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von (T)- zu (D)-Einheiten von 0,5 bis 2,0.

Unter diesen Beispielen werden Siliconharze besonders bevorzugt, deren Einheiten der Formel (II) zu mindestens 50%, bevorzugt mindestens 70%, insbesondere mindestens 85% aus T- Einheiten der Formeln PhSiO_{3/2}, PhSi(OR^{4'})O_{2/2}, PhSi(OR^{4'})₂O_{1/2}, Me SiO_{3/2}, MeSi(OR^{4'})O_{2/2} und MeSi(OR^{4'})₂O_{1/2} gebildet werden, wobei diese Siliconharze mindestens 30%, bevorzugt mindestens 40%, insbesondere mindestens 50% T-Einheiten der Formeln PhSiO_{3/2}, PhSi(OR^{4'})O_{2/2} und PhSi(OR^{4'})₂O_{1/2} und mindestens 10%, bevorzugt mindestens 15%, insbesondere mindestens 20% T-Einheiten der MeSiO_{3/2}, MeSi(OR^{4'})O_{2/2} und MeSi(OR^{4'})₂O_{1/2} enthalten.

Vorzugsweise besitzen die Siliconharze eine mittlere Molmasse (Zahlenmittel) Mn von mindestens 500 g/mol und besonders bevorzugt von mindestens 600 g/mol. Die mittlere Molmasse Mn liegt vorzugsweise bei höchstens 400000 g/mol, besonders bevorzugt bei höchstens 100000 g/mol, insbesondere bei höchstens 50000 g/mol.

Solche Siliconharze können bei 23°C und 1000 hPa sowohl fest als auch flüssig sein, wobei Siliconharze bevorzugt flüssig sind.

Bei den Siliconharzen handelt es sich um handelsübliche Produkte (beispielsweise Silres^{®} IC 368 der Firma Wacker Chemie (DE)) oder diese können nach in der Siliciumchemie gängigen Methoden hergestellt werden.

Weiterhin kann die reaktive Heißschmelzklebstoffzusammensetzung nach der vorliegenden Erfindung zusätzlich mindestens ein klebrigmachendes Polymer (Tackifier) enthalten. Der Anteil liegt vorteilhafterweise bei 10 Gew.-% bis 40 Gew.-% bezogen auf das Gesamtgewicht der Zusammensetzung.

Weiterhin kann die reaktive Heißschmelzklebstoffzusammensetzung nach der vorliegenden Erfindung zusätzlich mindestens einen Füllstoff enthalten. Vorteilhafterweise beträgt dessen Anteil 10 Gew.-% bis 40 Gew.-% bezogen auf das Gesamtgewicht der Zusammensetzung. Beispielhafte Füllstoffe sind Calciumcarbonat, beispielsweise Kreide oder Korund, wie Edelkorund. Durch den Einsatz von Füllstoff kann der Fadenzug beim Verarbeiten der Klebstoffzusammensetzung vermieden oder vermindert werden.

Durch die erfindungsgemäßen reaktiven Heißschmelzklebstoffzusammensetzungen lassen sich hohe Füllgrade realisieren, was bei verschiedenen Anwendungen vorteilhaft sein kann. Zu nennen seien hier beispielsweise Anwendungen, die eine gute thermische Leitfähigkeit oder besondere Anforderungen hinsichtlich des Brandverhaltenes erfordern.

Ein weiterer Aspekt der vorliegenden Erfindung ist ein Verfahren zur Herstellung einer reaktiven Heißschmelzklebstoffzusammensetzung nach der vorliegenden Erfindung, der die Schritte (a) bis (d) enthält.

Dabei wird in einem ersten Schritt (a) mindestens ein Acrylatharz basiertes Polymer zu mindestens einer zumindest bei 100 °C flüssigen chemischen Verbindung, in der sich zumindest bei 150 °C das mindestens eine Acrylatharz basierte Polymer löst, hinzugefügt.

Ebenso kann das mindestens eine Acrylharz-basierte Polymer zu einer Mischung, die die mindestens eine chemische Verbindung enthält, hinzugefügt werden.

Das Hinzufügen erfolgt bei einer Temperatur im Bereich von 130 °C bis 170 °C, vorzugsweise im Bereich von 140 °C bis 160 °C insbesondere bei 150 °C.

Weiterhin kann in Schritt (a) ein klebrigmachendes Polymer hinzugefügt werden.

In einem nächsten Schritt (b)erfolgt ein Abkühlen der Mischung auf eine Temperatur im Bereich von 80°C bis 120 °C.

Danach folgt als Schritt (c) das Hinzufügen mindestens eines alpha-silan-terminierten organischen Polymers zu der abgekühlten Mischung.

Schließlich erfolgt in Schritt (d) das Hinzufügen mindestens eines eine oder mehrere Aminogruppen enthaltenden oligomeren Silans, wobei eine reaktive Heißschmelzklebstoff-zusammensetzung nach der vorliegenden Erfindung erhalten wird.

In Schritt (c) kann zusätzlich mindestens ein Füllstoff hinzugefügt werden. Vorzugsweise erfolgen die Schritte (c) und (d) derart nacheinander, dass zwischen den Schritten entgast werden kann.

Die erfindungsgemäße reaktive Heißschmelzklebstoffzusammensetzung ist walzenstabil und daher einer Applikation über Walzen zugänglich. Dementsprechend eignet sich die erfindungsgemäße reaktive Heißschmelzklebstoffzusammensetzung besonders für ein Verfahren zur Flächenkaschierung, in dem die reaktive Heißschmelzklebstoffzusammensetzung nach der vorliegenden Erfindung auf einem Substrat mit Hilfe einer Auftragswalze aufgetragen wird.

Überraschenderweise hat sich gezeigt, dass der Auftrag mit Hilfe einer Walzenauftragsmaschine selbst nach Überschreiten des Zeitraums der Walzenstabilität, d. h. wenn das Bindemittel beim Verarbeiten merklichen Fadenzug aufweist, der das Auftragsbild bestimmt, reinigen lässt.

Dementsprechend ist ein weiterer Gegenstand der vorliegenden Erfindung die Verwendung einer erfindungsgemäßen reaktiven Heißschmelzklebstoffzusammensetzung zum Walzenauftrag.

Vorteilhafte Anwendungen der erfindungsgemäßen reaktiven Heißschmelzklebstoffzusammensetzungen ergeben sich aus deren guten Haftung und Anfangshaftung. Auch für den Fall, dass kein Walzenauftrag erfolgt, beispielsweise der Einsatz in der Fensterprofilummantelung, zeigen sich die vorteilhaften Eigenschaften, die nachfolgend aufgeführt sind. Weitere Anwendungen sind solche, bei denen eine verbesserte Wärmeleitfähigkeit erreicht werden können. Ebenso seien Anwendungen zu nennen, die mit einem verbesserten Brandverhalten einhergehen.

Es zeigen sich insbesondere folgende Vorteile:
- Isocyanatfreiheit,
- gutes Haftungsspektrum, insbesondere auf Metallen, Glas und anderen Werkstoffen
- Kein Aufschäumen durch CO₂-Bildung.

## Patentansprüche

1. Reaktive Heißschmelzklebstoffzusammensetzung bezogen auf das Gesamtgewicht der Zusammensetzung enthaltend
a) 3 Gew.-% bis 49 Gew.-% mindestens eines alpha-Silan-terminierten organischen Polymers;
b) 1 Gew.-% bis weniger als 20 Gew.-%, vorzugsweise 1 Gew.-% bis 10 Gew.-%, mindestens eines Acrylatharz basierten Polymers;
c) 1 Gew.-% bis 20 Gew.-%, vorzugsweise 1 Gew.-% bis 10 Gew.-%, mindestens einer zumindest bei 100 °C flüssigen chemischen Verbindung, in der sich zumindest bei 150 °C das mindestens eine Acrylatharz basierte Polymer löst;
d) 0,001 Gew.-% bis 5 Gew.-%, vorzugsweise 0,001 Gew.-% bis 2 Gew.-%, mindestens eines eine oder mehrere Aminogruppen enthaltenden oligomeren Silans.

2. Reaktive Heißschmelzklebstoffzusammensetzung nach Anspruch 1, **dadurch gekennzeichnet, dass** das mindestens eine alpha-Silan-terminierte organische Polymer eine Vielzahl von Endgruppen der Formel *-X-C(=O)-N(R)-C(R¹R²)-Si(R³)ₐ(OR⁴)₃₋ₐ aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 1 oder 2 steht und
"*" die Bindung für die Anbindung an das Polymer kennzeichnet.

3. Reaktive Heißschmelzklebstoffzusammensetzung nach Anspruch 1 oder 2, **dadurch gekennzeichnet, dass** das organische Polymer ein Polyoxyalkylen, ein Kohlenwasserstoffpolymer, ein Polyurethan, ein Polyester, ein Polyamid, ein Polyacrylat, ein Polymethacrylat oder ein Polycarbonat ist.

4. Reaktive Heißschmelzklebstoffzusammensetzung nach einem der Ansprüche 1 bis 3, **dadurch gekennzeichnet, dass** das Acrylatharz basierte Polymer ein Homoacrylat, ein Homomethacrylat, ein Copolymer aus mindestens zwei unterschiedlichen Acrylaten, ein Copolymer aus mindestens zwei unterschiedlichen Methacrylaten oder ein Copolymer aus mindestens einem Acrylat und mindestens einem Methacrylat ist.

5. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Weichmacher ist.

6. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Polyalkylenglykol ist.

7. Reaktive Heißschmelzklebstoffzusammensetzung nach einem der Ansprüche 1 bis 4, **dadurch gekennzeichnet, dass** die mindestens eine zumindest bei 100 °C flüssige chemische Verbindung, in der sich zumindest bei 150 °C das mindestens eine Acrylatharz basierte Polymer löst, ein Alkoxysilan ist.

8. Reaktive Heißschmelzklebstoffzusammensetzung nach einem der Ansprüche 1 bis 7, **dadurch gekennzeichnet, dass** das mindestens eine eine oder mehrere Aminogruppen enthaltende oligomere Silan ein Gemisch Aminogruppen-haltiger Alkoxy-/Hydroxy-Silane und/oder Silanole sowie darauf basierender Kondensations- und Cokondensationsprodukte ist und vorzugsweise ein Molekulargewicht von mehr als 500 g/mol aufweist.

9. Reaktive Heißschmelzklebstoffzusammensetzung nach einem der Ansprüche 1 bis 8, **dadurch gekennzeichnet, dass** die Zusammensatzung zusätzlich 10 Gew.-% bis 40 Gew.-% mindestens eines klebrigmachenden Polymers (Tackifier) bezogen auf das Gesamtgewicht der Zusammensetzung aufweist.

10. Reaktive Heißschmelzklebstoffzusammensetzung nach einem der Ansprüche 1 bis 9, **dadurch gekennzeichnet, dass** die Zusammensetzung zusätzlich 10 Gew.-% bis 40 Gew.-% mindestens eines Füllstoffes bezogen auf das Gesamtgewicht der Zusammensetzung aufweist.

11. Verfahren zur Herstellung einer reaktiven Heißschmelzklebstoffzusammensetzung nach einem der Ansprüche 1 bis 10 die Schritte enthaltend
(a) Hinzufügen von mindestens einem Acrylatharz basierten Polymer zu mindestens einer zumindest bei 100 °C flüssigen chemischen Verbindung, in der sich zumindest bei 150 °C das mindestens eine Acrylatharz basierte Polymer löst, oder Hinzufügen zu einer Mischung, die die mindestens eine chemische Verbindung enthält, bei einer Temperatur im Bereich von 130 °C bis 170 °C;
(b) Abkühlen der Mischung auf eine Temperatur im Bereich von 80°C bis 120 °C;
(c) Hinzufügen mindestens eines alpha-silan-terminierten organischen Polymers zu der abgekühlten Mischung;
(d) Hinzufügen mindestens eines eine oder mehrere Aminogruppen enthaltenden oligomeren Silans, wobei eine reaktive Heißschmelzklebstoffzusammensetzung nach einem der Ansprüche 1 bis 10 erhalten wird.

12. Verfahren nach Anspruch 11, **dadurch gekennzeichnet, dass** in Schritt (a) weiterhin ein klebrigmachendes Polymer hinzugefügt wird.

13. Verfahren nach Anspruch 11 oder 12, **dadurch gekennzeichnet, dass** in Schritt (c) zusätzlich mindestens ein Füllstoff hinzugefügt.

14. Verfahren nach einem der Ansprüche 11 bis 13, **dadurch gekennzeichnet, dass** die Schritte (c) und (d) nacheinander erfolgen und zwischen den Schritten entgast wird.

15. Verfahren zur Flächenkaschierung den Schritt enthaltend
- Auftragen einer reaktiven Heißschmelzklebstoffzusammensetzung nach einem der Ansprüche 1 bis 10 auf einem Substrat mit Hilfe einer Auftragswalze.

## Claims

1. A reactive hotmelt adhesive composition comprising, based on the total weight of the composition,
a) 3 wt% to 49 wt% of at least one alpha-silane-terminated organic polymer;
b) 1 wt% to less than 20 wt%, preferably 1 wt% to 10 wt%, of at least one acrylate resin-based polymer;
c) 1 wt% to 20 wt%, preferably 1 wt% to 10 wt%, of at least one chemical compound which is liquid at least at 100°C and in which at least at 150°C the at least one acrylate resin-based polymer dissolves;
d) 0.001 wt% to 5 wt%, preferably 0.001 wt% to 2 wt%, of at least one oligomeric silane comprising one or more amino groups.

2. The reactive hotmelt adhesive composition as claimed in claim 1, **characterized in that** the at least one alpha-silane-terminated organic polymer comprises a multiplicity of end groups of the formula *-X-C(=O)-N(R)-C(R¹R²)-Si(R³)ₐ(OR⁴)₃₋ₐ, where
X is O or N(R);
each R independently of any other is hydrogen or a hydrocarbon radical having 1 to 20 carbon atoms;
R¹ and R² independently of one another are hydrogen or a hydrocarbon radical having 1 to 20 carbon atoms;
R³ and R⁴ independently of one another are a hydrocarbon radical having 1 to 20 carbon atoms;
a is 1 or 2; and
"*" marks the bond for attachment to the polymer.

3. The reactive hotmelt adhesive composition as claimed in claim 1 or 2, **characterized in that** the organic polymer is a polyoxyalkylene, a hydrocarbon polymer, a polyurethane, a polyester, a polyamide, a polyacrylate, a polymethacrylate or a polycarbonate.

4. The reactive hotmelt adhesive composition as claimed in any of claims 1 to 3, **characterized in that** the acrylate resin-based polymer is a homoacrylate, a homomethacrylate, a copolymer of at least two different acrylates, a copolymer of at least two different methacrylates or a copolymer of at least one acrylate and at least one methacrylate.

5. The reactive hotmelt adhesive composition as claimed in any of claims 1 to 4, **characterized in that** the at least one chemical compound which is liquid at least at 100°C and in which at least at 150°C the at least one acrylate resin-based polymer dissolves, is a plasticizer.

6. The reactive hotmelt adhesive composition as claimed in any of claims 1 to 4, **characterized in that** the at least one chemical compound which is liquid at least at 100°C and in which at least at 150°C the at least one acrylate resin-based polymer dissolves is a polyalkylene glycol.

7. The reactive hotmelt adhesive composition as claimed in any of claims 1 to 4, **characterized in that** the at least one chemical compound which is liquid at least at 100°C and in which at least at 150°C the at least one acrylate resin-based polymer dissolves is an alkoxysilane.

8. The reactive hotmelt adhesive composition as claimed in any of claims 1 to 7, **characterized in that** the at least one oligomeric silane comprising one or more amino groups is a mixture of amino group-containing alkoxy-/hydroxy-silanes and/or silanols and condensation products and co-condensation products based thereon and preferably has a molecular weight of more than 500 g/mol.

9. The reactive hotmelt adhesive composition as claimed in any of claims 1 to 8, **characterized in that** the composition further comprises 10 wt% to 40 wt% of at least one tackifying polymer (tackifier), based on the total weight of the composition.

10. The reactive hotmelt adhesive composition as claimed in any of claims 1 to 9, **characterized in that** the composition further comprises 10 wt% to 40 wt% of at least one filler, based on the total weight of the composition.

11. A process for producing a reactive hotmelt adhesive composition as claimed in any of claims 1 to 10, comprising the steps of
(a) adding at least one acrylate resin-based polymer to at least one chemical compound which is liquid at least at 100°C and in which at least at 150°C the at least one acrylate resin-based polymer dissolves, or adding it to a mixture which comprises the at least one chemical compound, at a temperature in the range of 130°C to 170°C;
(b) cooling the mixture to a temperature in the range from 80°C to 120°C;
(c) adding at least one alpha-silane-terminated organic polymer to the cooled mixture;
(d) adding at least one oligomeric silane comprising one or more amino groups, to give a reactive hotmelt adhesive composition as claimed in any of claims 1 to 10.

12. The process as claimed in claim 11, **characterized in that** in step (a) additionally a tackifying polymer is added.

13. The process as claimed in claim 11 or 12, **characterized in that** in step (c) further at least one filler is added.

14. The process as claimed in any of claims 11 to 13, **characterized in that** the steps (c) and (d) take place successively and degassing is carried out between the steps.

15. A process for surface lamination, comprising the step of
- applying a reactive hotmelt adhesive composition as claimed in any of claims 1 to 10 to a substrate by means of an applicator roll.

## Revendications

1. Composition adhésive thermofusible réactive contenant, par rapport au poids total de la composition,
a) 3 % en poids à 49 % en poids d'au moins un polymère organique à terminaison alpha-silane ;
b) 1 % en poids à moins de 20 % en poids, de préférence 1 % en poids à 10 % en poids, d'au moins un polymère à base de résine acrylate ;
c) 1 % en poids à 20 % en poids, de préférence 1 % en poids à 10 % en poids, d'au moins un composé chimique liquide au moins à 100 °C, dans lequel l'au moins un polymère à base de résine acrylate se dissout au moins à 150 °C ;
d) 0,001 % en poids à 5 % en poids, de préférence 0,001 % en poids à 2 % en poids, d'au moins un silane oligomère contenant un ou plusieurs groupes amino.

2. Composition adhésive thermofusible réactive selon la revendication 1, **caractérisée en ce que** l'au moins un polymère organique à terminaison alpha-silane présente une pluralité de groupes terminaux de formule *-X-C(=O)-N (R) -C(R¹R²)-Si(R³)ₐ(OR⁴)₃₋ₐ, dans laquelle
X représente O ou N(R) ;
chaque R représente indépendamment les uns des autres hydrogène ou un radical hydrocarboné ayant 1 à 20 atomes de carbone ;
R¹ et R² représentent indépendamment l'un de l'autre pour hydrogène ou un radical hydrocarboné ayant 1 à 20 atomes de carbone ;
R³ et R⁴ représentent indépendamment l'un de l'autre pour un radical hydrocarboné ayant 1 à 20 atomes de carbone ; a représente 1 ou 2 et
« * » indique la liaison pour le rattachement au polymère.

3. Composition adhésive thermofusible réactive selon la revendication 1 ou 2, **caractérisée en ce que** le polymère organique est un polyoxyalkylène, un polymère hydrocarboné, un polyuréthane, un polyester, un polyamide, un polyamide, un polyacrylate, un polyméthacrylate ou un polycarbonate.

4. Composition adhésive thermofusible réactive selon l'une quelconque des revendications 1 à 3, **caractérisée en ce que** le polymère à base de résine acrylate est un homoacrylate, un homométhacrylate, un copolymère d'au moins deux acrylates différents, un copolymère d'au moins deux méthacrylates différents ou un copolymère d'au moins un acrylate et d'au moins un méthacrylate.

5. Composition adhésive thermofusible réactive selon l'une quelconque des revendications 1 à 4, **caractérisée en ce que** l'au moins un composé chimique liquide au moins à 100 °C, dans lequel l'au moins un polymère à base de résine acrylate se dissout au moins à 150 °C, est un plastifiant.

6. Composition adhésive thermofusible réactive selon l'une quelconque des revendications 1 à 4, **caractérisée en ce que** l'au moins un composé chimique liquide au moins à 100 °C, dans lequel l'au moins un polymère à base de résine acrylate se dissout au moins à 150 °C, est un polyalkylène glycol.

7. Composition adhésive thermofusible réactive selon l'une quelconque des revendications 1 à 4, **caractérisée en ce que** l'au moins un composé chimique liquide au moins à 100 °C, dans lequel l'au moins un polymère à base de résine acrylate se dissout au moins à 150 °C, est un alcoxysilane.

8. Composition adhésive thermofusible réactive selon l'une quelconque des revendications 1 à 7, **caractérisée en ce que** l'au moins un silane oligomère contenant au moins un ou plusieurs groupes amino est un mélange d'alcoxy/hydroxysilanes et/ou silanols contenant des groupes amino et de produits de condensation et de cocondensation à base de ceux-ci et présente de préférence un poids moléculaire supérieur à 500 g/mol.

9. Composition adhésive thermofusible réactive selon l'une quelconque des revendications 1 à 8, **caractérisée en ce que** la composition comprend en outre 10 % en poids à 40 % en poids d'au moins un polymère collant (agent collant) par rapport au poids total de la composition.

10. Composition adhésive thermofusible réactive selon l'une quelconque des revendications 1 à 9, **caractérisée en ce que** la composition comprend en outre 10 % en poids à 40 % en poids d'au moins une charge par rapport au poids total de la composition.

11. Procédé de production d'une composition adhésive thermofusible réactive selon l'une quelconque des revendications 1 à 10, comprenant les étapes
(a) l'ajout d'au moins un polymère à base de résine acrylate à au moins un composé chimique liquide au moins à 100 °C dans lequel l'au moins un polymère à base de résine acrylate se dissout au moins à 150 °C, ou l'ajout à un mélange contenant l'au moins un composé chimique à une température dans la gamme de 130 °C à 170 °C ;
(b) le refroidissement du mélange à une température dans la gamme de 80 °C à 120 °C ;
(c) l'ajout au mélange refroidi d'au moins un polymère organique à terminaison alpha-silane ;
(d) l'ajout d'au moins un silane oligomère contenant un ou plusieurs groupes amino, une composition adhésive thermofusible réactive selon l'une quelconque des revendications 1 à 10 étant obtenue.

12. Procédé selon la revendication 11, **caractérisé en ce que**, dans l'étape (a), un polymère collant est ajouté en outre.

13. Procédé selon la revendication 11 ou 12, **caractérisé en ce qu'**au moins une charge est ajoutée en outre à l'étape (c).

14. Procédé selon l'une quelconque des revendications 11 à 13, **caractérisé en ce que** les étapes (c) et (d) sont réalisées successivement et un dégazage est effectué entre les étapes.

15. Procédé de stratification de surface comprenant l'étape
- l'application d'une composition adhésive thermofusible réactive selon l'une quelconque des revendications 1 à 10 sur un substrat à l'aide d'un rouleau applicateur.
